# EUROPEAN PATENT APPLICATION

(11) **EP 4 707 597 A1**
(43) Date of publication of application: **11.03.2026**
(21) Application number: 24933612.4
(22) Date of filing: 29.04.2024
(51) Int. Cl.: F04B 39/12

(54) **COMPRESSOR AND VAPOR INJECTION ENTHALPY INCREASE STRUCTURE THEREFOR**

(30) Priority: 02.04.2024 CN 202410392124; 02.04.2024 CN 202420663733 U
(71) Applicant: Shanghai Highly Electrical Appliances Co., Ltd., Shanghai 201206 (CN)
(72) Inventor: YANG, Yaomin, Shanghai 201206 (CN); XU, Zichan, Shanghai 201206 (CN); LIU, Xiaoqiang, Shanghai 201206 (CN); PAN, Fei, Shanghai 201206 (CN); HU, Pengfei, Shanghai 201206 (CN); JIA, Xinxin, Shanghai 201206 (CN)
(74) Representative: Canzler & Bergmeier Patentanwälte Partnerschaft mbB
(86) International application number: PCT/CN2024/090508
(87) International publication number: WO 2025/208680

(57) **Abstract**

A vapor injection enthalpy increase structure for a compressor, and a compressor comprising the vapor injection enthalpy increase structure. The vapor injection enthalpy increase structure comprises: a main flow channel, which is connected to an intake port of a cylinder and delivers primary vapor into a chamber of the cylinder; a vapor injection port channel (1), one end of which is connected to the chamber of the cylinder; and a vapor injection flow channel (2), which is connected to the other end of the vapor injection port channel (1) and delivers vapor to be injected into the chamber of the cylinder by means of the vapor injection port channel (1). The minimum flow area of the vapor injection flow channel (2) is S1, and the minimum flow area of the main flow channel is S2, and the following condition is satisfied: 1%≤S1/S2≤18%. By optimizing the design of the minimum flow areas of the vapor injection flow channel (2) and the main flow channel, flow regulation and control of the vapor injection flow channel (2) and the main flow channel can be achieved, and the capacity and performance advantages of a vapor injection compressor can be effectively brought into play, thereby improving the capacity and energy efficiency of the compressor, and ensuring the reliability of the compressor.

## Description

### FIELD OF THE INVENTION

The present application relates to the technical field of compressors, and in particular to an enhanced vapor injection structure of a compressor and a compressor including the enhanced vapor injection structure.

### BACKGROUND OF THE INVENTION

When the ambient temperature is low, compressors operate under a relatively high pressure, resulting in a significant decrease in their capacity and energy efficiency. To improve the capacity and energy efficiency of the compressors, a vapor-injection scheme is typically adopted. This scheme involves introducing the refrigerant vapor, after condensation and throttling, into the cylinder chamber to increase the refrigerant flow rate and the suction temperature, thereby enhancing the capacity and energy efficiency of compressors. Currently, vapor-injection compressors mainly achieve the injection of vapor into the cylinder chamber through two methods. In one method, the opening and closing of the injection flow path is controlled by the movement trajectory of the piston. In the other method, the opening and closing of the injection flow path is controlled by a check valve, such as a ball valve, a conical valve, a reed valve, or a pressure-responsive valve.

Although the above vapor-injection methods can achieve vapor injection in the compressors, the following problems remain: (1) The clearance volume increases. The presence of the injection structure increases the compressors' clearance volume, which reduces the compressors' capacity and energy efficiency, particularly under non-injection operating conditions. (2) When the check valve, such as the ball valve or the conical valve, is used, the injection flow path becomes relatively complex, resulting in significant pressure loss. Moreover, during compressor operation, the frequent opening and closing of the check valve may cause collisions with the cylinder walls, posing potential reliability risks. (3) The improvement in injection capacity and effectiveness is limited. The distribution of injection flow relative to the cylinder intake is often unreasonable, preventing the vapor-injection compressors from fully realizing their capacity and energy efficiency. In addition, liquid carryover may occur during injection, which adversely affects the reliability of compressors.

### SUMMARY OF THE INVENTION

The present application provides an enhanced vapor injection structure of a compressor, which can improve the compressor's capacity and energy efficiency.

The present application adopts the following technical solutions.

The present application provides an enhanced vapor injection structure of a compressor. The enhanced vapor injection structure includes a main flow passage, an injection port passage, and an injection flow passage. The main flow passage is connected to a suction port of a cylinder and configured to deliver a main gas into a cylinder cavity. A first end of the injection port passage is connected to the cylinder cavity. The injection flow passage is connected to a second end of the injection port passage and configured to deliver injection gas into the cylinder cavity through the injection port passage. A minimum flow area of the injection flow passage is S1, a minimum flow area of the main flow passage is S2, and a ratio of S1 to S2 satisfies 1% ≤ S1/S2 ≤ 18%.

Preferably, the ratio of S1 to S2 satisfies 8% ≤ S1/S2 ≤ 10%.

Preferably, the ratio of S1 to S2 satisfies 4% ≤ S1/S2 ≤ 6%.

Preferably, a minimum flow area of the injection port passage is S3, and a ratio of S3 to S1 satisfies 1% ≤ S3/S1 ≤ 10%.

Preferably, the ratio of S3 to S1 satisfies 4% ≤ S3/S1 ≤ 9%.

Preferably, the ratio of S3 to S1 satisfies 5% ≤ S3/S1 ≤ 7%.

Preferably, a check valve is provided on the injection flow passage to open or close the injection flow passage.

Preferably, the check valve is a pressure valve.

Preferably, the injection flow passage is provided on an intermediate plate, the cylinder, or a bearing of the compressor.

The present application further provides a compressor including the above-described enhanced vapor injection structure.

Compared with the prior art, the present application has the following notable advantages:

In the enhanced vapor injection structure of the compressor in the present application, the ratio of the minimum flow area S1 of the injection flow passage to the minimum flow area S2 of the main flow passage is optimally designed, that is, the minimum flow areas S1 and S2 of the injection flow passage and the main flow passage are optimized to fall within a predetermined S1/S2 ratio range. This allows effective regulation of the flows through the injection flow passage and the main flow passage, thereby effectively leveraging the capacity and performance advantages of the injection compressor, improving its cooling capacity and energy efficiency, and ensuring its reliability.

### BRIEF DESCRIPTION OF DRAWINGS

FIG. 1 is a schematic diagram of an enhanced vapor injection structure of a compressor according to an embodiment of the present application.
FIG. 2 is a schematic diagram of a connection between an injection flow passage and an injection port passage of an enhanced vapor injection structure of a compressor according to an embodiment of the present application.
FIG. 3 is a schematic diagram of a variation of COP of a compressor with respect to an S1/S2 ratio of an enhanced vapor injection structure of a compressor according to an embodiment of the present application.
FIG. 4 is a schematic diagram of a compressor cooling capacity with respect to an S1/S2 ratio of an enhanced vapor injection structure of a compressor according to an embodiment of the present application.
FIG. 5 is a schematic diagram of a variation of COP of a compressor with respect to an S3/S1 ratio of an enhanced vapor injection structure of a compressor according to an embodiment of the present application.
FIG. 6 is a schematic diagram of a compressor cooling capacity with respect to an S3/S1 ratio of an enhanced vapor injection structure of a compressor according to an embodiment of the present application.
FIG. 7 is a schematic cross-sectional view of an injection flow passage disposed on an intermediate plate of an enhanced vapor injection structure of a compressor according to an embodiment of the present application.
FIG. 8 is a schematic view of a dual-valve injection configuration of an enhanced vapor injection structure of a compressor according to an embodiment of the present application, with a check valve implemented as a pressure valve.
FIG. 9 is a schematic view of a single-valve injection configuration of an enhanced vapor injection structure of a compressor according to an embodiment of the present application, with a check valve implemented as a pressure valve.

### Reference numerals

- 1: Injection port passage
- 2: Injection flow passage
- 3: Check valve
- 31: Valve plate
- 32: Valve plate baffle
- 33: Rivet
- 4: Structural component
- 41: Valve plate groove

### DETAILED DESCRIPTION

The specific embodiments of the present application are described in further detail below with reference to the accompanying drawings. The embodiments described herein are intended solely to illustrate the present application and shall not be construed as limiting the present application.

In the description of the present application, it should be noted that terms such as "center", "longitudinal", "lateral", "upper", "lower", "front", "rear", "left", "right", "vertical", "horizontal", "top", "bottom", "inner", "outer", and the like used to indicate directions or positional relationships are based on the orientations or positions shown in the accompanying drawings. They are provided solely for the purpose of facilitating and simplifying the description of the present application and do not imply that the devices or components must be constructed or operated in any particular orientation. Accordingly, they should not be construed as limiting the present application. In addition, the terms "first", "second," and the like are used solely for descriptive purposes and should not be construed as indicating or implying relative importance.

In the present application, unless otherwise specified and limited, terms such as "mount", "couple", "connect", and the like should be broadly understood, for example, it can be a fixed connection, a detachable connection, or an integral connection; it can be a mechanical connection, or an electrical connection; it can be a direct connection, or an indirect connection through an intermediate medium, and it also can be communication inside two components. For those skilled in art, the specific meanings of the above terms in the context can be understood according to the specific situation.

Additionally, in the description of the present application, "plural" means two or more unless otherwise specified.

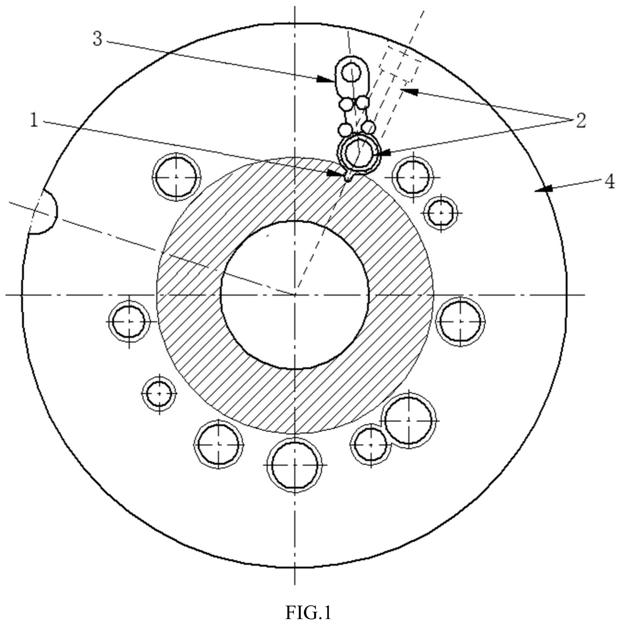

FIGs.1 to 9 show an embodiment of an enhanced vapor injection structure of a compressor provided by the present application.

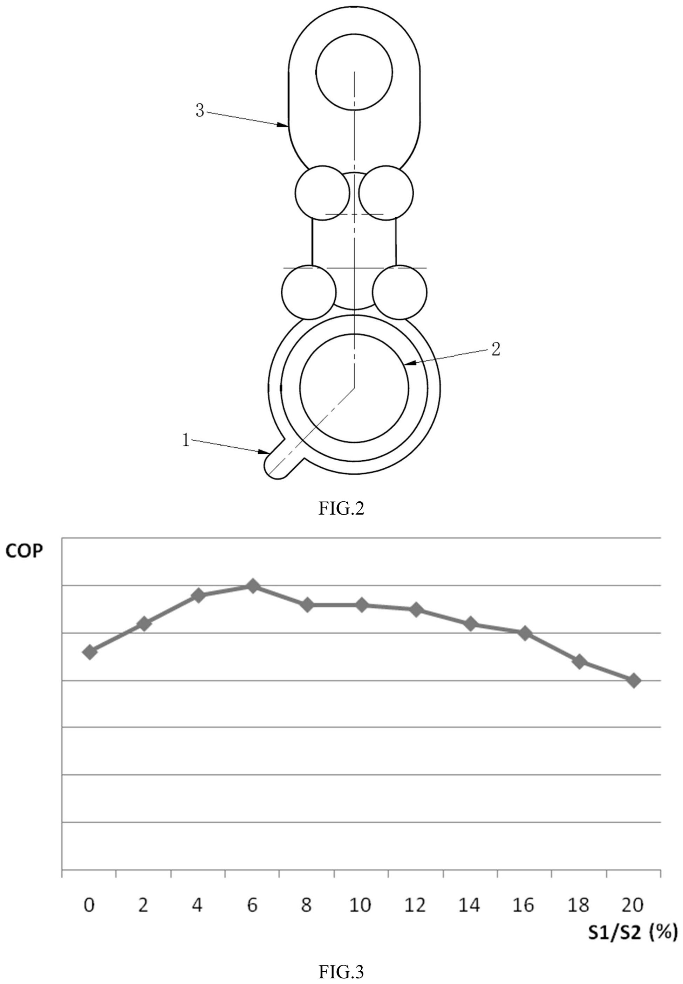

Referring to FIGs.1 and 2, the enhanced vapor injection structure of the compressor includes a main flow passage (not shown), an injection port passage 1, and an injection flow passage 2.

The main flow passage is connected to and in communication with a suction port of a cylinder of the compressor, and conveys a main gas from the main flow passage into a cylinder cavity. The main gas, which is a refrigerant after condensation and throttling, is supplied into the cylinder cavity and compressed by a compression mechanism within the cylinder. Typically, the main gas supplied into the cylinder cavity for compression comes from an evaporator, and a receiver is provided between the evaporator and the cylinder to collect liquid refrigerant contained in the refrigerant discharged from the evaporator. In the present embodiment, the main flow passage is a main flow path extending from an inner tube of the receiver to the suction port of the cylinder. The main flow passage delivers the main gas, which enters the receiver from the evaporator, into the cylinder cavity. The main gas enters the cylinder cavity directly through the suction port of the cylinder for compression. The main flow passage has a minimum flow area S2, which corresponds to a minimum cross-sectional area of the main flow passage.

The injection port passage 1 is disposed at an inner wall of the cylinder cavity. A first end of the injection port passage 1 is connected to and in communication with the cylinder cavity. The injection flow passage 2 is connected to and in communication with a second end of the injection port passage 1. The injection flow passage 2 delivers injection gas into the cylinder cavity through the injection port passage 1. In other words, the injection flow passage 2 supplies injection gas to the cylinder cavity, with a first end of the injection flow passage 2 connected to the injection port passage 1, such that the injection gas introduced into the injection flow passage 2 enters the injection port passage 1 and is subsequently injected into the cylinder cavity through the injection port passage 1. The injection gas is also the refrigerant after condensation and throttling. In the present embodiment, the injection flow passage 2 is a flow path extending from a source of the refrigerant to the injection port passage 1. The injection port passage 1 refers to a jetting flow path extending from the first end of the injection flow passage 2 to the cylinder cavity. The injection flow passage 2 is a selectively openable and closable flow passage, which can be opened as needed to deliver the injection gas into the cylinder cavity. The injection flow passage 2 has a minimum flow area S1, which corresponds to a minimum cross-sectional area of the injection flow passage 2. The injection port passage 1 has a minimum flow area S3, which corresponds to a minimum cross-sectional area of the injection port passage 1.

The refrigerant flow in the main flow passage, the injection port passage 1, and the injection flow passage 2 is related to the flow areas of the respective passages, particularly the minimum flow areas. By adjusting ratios of the minimum flow area S1 of the injection flow passage 2, the minimum flow area S2 of the main flow passage, and the minimum flow area S3 of the injection port passage 1, the capacity and energy efficiency of the compressor under injection conditions can be maintained within an optimal range.

In the present embodiment, the ratio of the minimum flow area S1 of the injection flow passage 2 to the minimum flow area S2 of the main flow passage is set within a range of 1% to 18%, i.e., 1% ≤ S1/S2 ≤ 18%, thereby effectively improving the capacity and energy efficiency of the compressor. Preferably, the ratio of the minimum flow area S1 of the injection flow passage 2 to the minimum flow area S2 of the main flow passage is set within a range of 8% to 10%, i.e., 8% ≤ S1/S2 ≤ 10%, so that the compressor achieves optimal capacity and energy efficiency. Preferably, the ratio of the minimum flow area S1 of the injection flow passage 2 to the minimum flow area S2 of the main flow passage is set within the range of 4% to 6%, i.e., 4% ≤ S1/S2 ≤ 6%, at which the energy efficiency of the compressor reaches an optimal level.

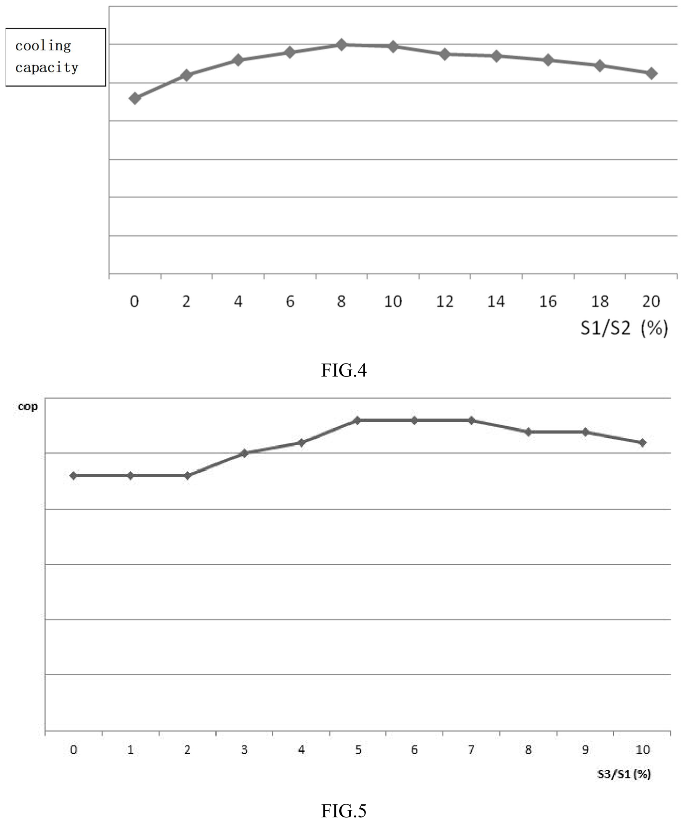

FIG. 3 shows a variation of coefficient of performance (COP) of the compressor with respect to the ratio S1/S2. FIG. 4 shows a variation of cooling capacity of the compressor with respect to the ratio S1/S2.

In the enhanced vapor injection structure of the compressor in the present embodiment, the ratio of the minimum flow area S1 of the injection flow passage 2 to the minimum flow area S2 of the main flow passage is optimally designed, that is, the minimum flow areas S1 and S2 of the injection flow passage 2 and the main flow passage are optimized to fall within a predetermined S1/S2 ratio range. This allows effective regulation of the flows through the injection flow passage 2 and the main flow passage, thereby effectively leveraging the capacity and performance advantages of the injection compressor, improving its cooling capacity and energy efficiency, and ensuring its reliability.

When the injection flow passage 2 is opened, it communicates with the injection port passage 1, and the injection refrigerant introduced into the injection flow passage 2 flows into the cylinder cavity through the injection port passage 1 for compression. If the flow area of the injection port passage 1 is too small, the injection refrigerant may be throttled, resulting in pressure loss and liquid carryover. If the flow area of the injection port passage 1 is set too large, not only is the compressor's clearance volume increased, but cross-flow may also occur between a suction chamber and a compression chamber of the compressor. Therefore, an appropriate flow area of the injection port passage 1 is beneficial to the energy efficiency of the compressor.

In the enhanced vapor injection structure of the compressor according to the present embodiment, the ratio of the minimum flow area S3 of the injection port passage 1 to the minimum flow area S1 of the injection flow passage 2 is further set within a range of 1% to 10%, that is, 1% ≤ S3/S1 ≤ 10%. As a result, the minimum flow area S3 of the injection port passage 1 is further optimally designed, which can effectively reduce refrigerant pressure loss, decrease the clearance volume, and improve the performance of the compressor. Preferably, the ratio of the minimum flow area S3 of the injection port passage 1 to the minimum flow area S1 of the injection flow passage 2 is set within a range of 4% to 9%, i.e., 4% ≤ S3/S1 ≤ 9%, so that the compressor can achieve maximum capacity and energy efficiency. More preferably, the ratio of the minimum flow area S3 of the injection port passage 1 to the minimum flow area S1 of the injection flow passage 2 is set within a range of 5% to 7%, i.e., 5% ≤ S3/S1 ≤ 7%, so that the compressor achieves optimal capacity and energy efficiency.

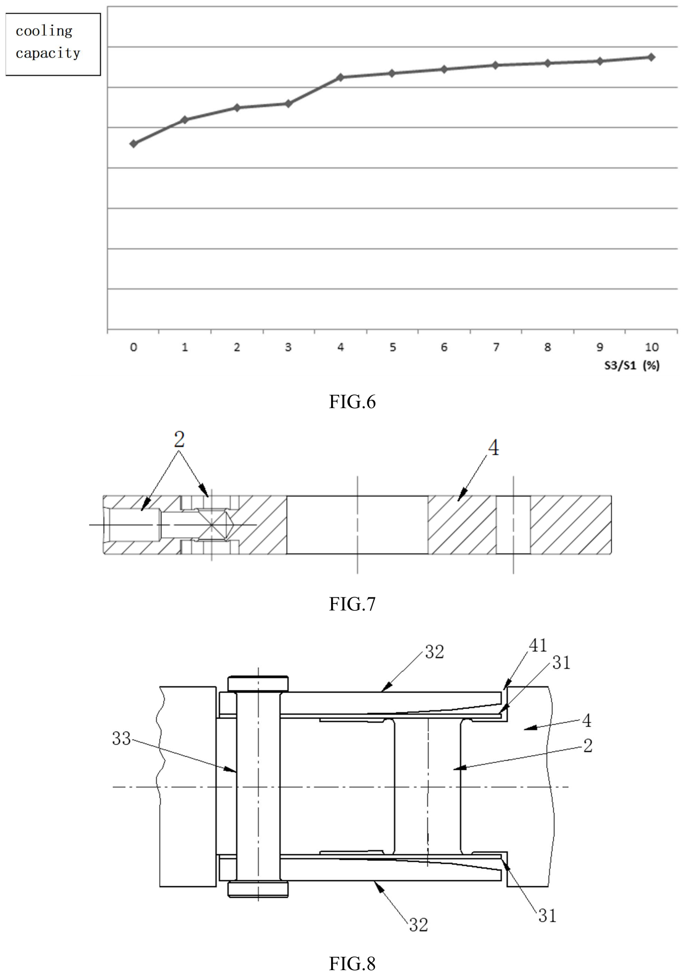

FIG. 5 shows a variation of COP of the compressor with respect to the ratio S3/S1. FIG. 6 shows a variation of the cooling capacity of the compressor with respect to the ratio S3/S1.

In the enhanced vapor injection structure of the compressor according to the present embodiment, the injection flow passage 2 is disposed on a structural component 4. The structural component 4 may be any component or structure in the compressor on which a flow passage leading to the cylinder cavity can be provided, including but not limited to the intermediate plate, cylinder, or bearing of the compressor. For example, FIG. 7 shows a schematic cross-sectional view of the injection flow passage 2 disposed on an intermediate plate, that is, the structural component 4 is the intermediate plate.

Preferably, in the enhanced vapor injection structure of the compressor in the present embodiment, a check valve 3 is provided on the injection flow passage 2 to open or close the injection flow passage 2. Preferably, the check valve 3 is a pressure valve, which can simplify the structure of the injection flow passage 2, reduce the pressure loss in the injection flow passage 2, and ensure reliable operation. The check valve 3 used to open or close the injection flow passage 2 is not limited to the pressure valve and may also be other types of check valves, such as a ball valve, a spring valve, or a conical valve. The injection flow passage 2 may supply the injection gas to cylinder cavities of two-stage cylinders of the compressor through two check valves in a dual-valve dual-injection configuration. It may also supply the injection gas to a cylinder cavity of a single-stage cylinder through one check valve in a single-valve single-injection configuration. It may also supply the injection gas respectively to cylinder cavities of the two-stage cylinders through one check valve in a single-valve dual-injection configuration.

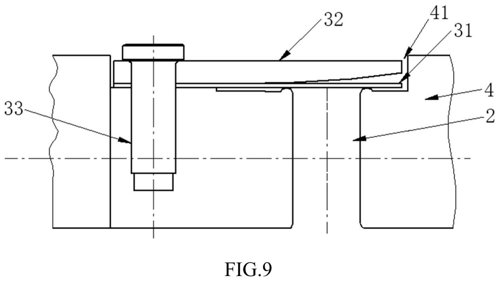

Taking the check valve 3 as the pressure valve and the structural component 4 as the intermediate plate of the compressor as an example, reference is made to FIGs. 8 and 9, which schematically illustrate the dual-valve and single-valve configurations, respectively. A valve plate 31 of the pressure valve is disposed at an end portion of the injection flow passage 2. A valve plate groove 41 is formed in the structural component 4, on which the injection flow passage 2 is disposed, at a location corresponding to the end portion of the injection flow passage 2. The valve plate 31 of the pressure valve is installed in the valve plate groove 41 and secured by a valve plate baffle 32 and a rivet 33. The valve plate 31 can be rotated by an external force to move away from or cover the end portion of the injection flow passage 2, thereby opening or closing the injection flow passage 2.

Based on the enhanced vapor injection structure of a compressor, an embodiment of the present application further provides a compressor. The compressor in the present embodiment includes the enhanced vapor injection structure as described in the above embodiment.

The above description merely illustrates the preferred embodiments of the present application. It should be noted that, for those skilled in the art, various modifications and substitutions can be made without departing from the principles of the present application, and such modifications and substitutions should also be considered within the scope of protection of the present application.

## Claims

1. An enhanced vapor injection structure of a compressor, comprising:
a main flow passage connected to a suction port of a cylinder and configured to deliver a main gas from the main flow passage into a cylinder cavity;
an injection port passage, wherein a first end of the injection port passage is connected to the cylinder cavity; and
an injection flow passage connected to a second end of the injection port passage and configured to deliver injection gas into the cylinder cavity through the injection port passage;
wherein a minimum flow area of the injection flow passage is S1, a minimum flow area of the main flow passage is S2, and a ratio of S1 to S2 satisfies 1% ≤ S1/S2 ≤ 18%.

2. The enhanced vapor injection structure according to claim 1, wherein the ratio of S1 to S2 satisfies 8% ≤ S1/S2 ≤ 10%.

3. The enhanced vapor injection structure according to claim 1, wherein the ratio of S1 to S2 satisfies 4% ≤ S1/S2 ≤ 6%.

4. The enhanced vapor injection structure according to any one of claims 1 to 3, wherein a minimum flow area of the injection port passage is S3, and a ratio of S3 to S1 satisfies 1% ≤ S3/S1 ≤ 10%.

5. The enhanced vapor injection structure according to claim 4, wherein the ratio of S3 to S1 satisfies 4% ≤ S3/S1 ≤ 9%.

6. The enhanced vapor injection structure according to claim 5, wherein the ratio of S3 to S1 satisfies 5% ≤ S3/S1 ≤ 7%.

7. The enhanced vapor injection structure according to claim 1, wherein a check valve is provided on the injection flow passage to open or close the injection flow passage.

8. The enhanced vapor injection structure according to claim 7, wherein the check valve is a pressure valve.

9. The enhanced vapor injection structure according to claim 1, wherein the injection flow passage is provided on the cylinder or a bearing of the compressor.

10. The enhanced vapor injection structure according to claim 1, wherein the main flow passage is a main flow path extending from an inner tube of a receiver to a suction port of the cylinder, configured to deliver the main gas entering the receiver from the evaporator into the cylinder cavity.

11. The enhanced vapor injection structure according to claim 7, wherein the check valve is a ball valve, a spring valve, or a conical valve.

12. The enhanced vapor injection structure according to claim 7, wherein upon the cylinder being a two-stage cylinder, the injection flow passage supplies injection gas to cylinder cavities of the two-stage cylinder respectively through two check valves in a dual-valve dual-injection configuration, or through one check valve in a single-valve dual-injection configuration.

13. The enhanced vapor injection structure according to claim 7, wherein upon the cylinder being a single-stage cylinder, the injection flow passage supplies injection gas to the cylinder cavity of the single-stage cylinder through one check valve in a single-valve, single-injection configuration.

14. The enhanced vapor injection structure according to claim 8, wherein the injection flow passage is provided on an intermediate plate of the compressor.

15. The enhanced vapor injection structure according to claim 14, wherein a valve plate groove is formed in the intermediate plate at a location corresponding to an end portion of the injection flow passage, wherein a valve plate of the pressure valve is installed in the valve plate groove, wherein the valve plate is rotated by an external force to move away from or cover the end portion of the injection flow passage, thereby opening or closing the injection flow passage.

16. The enhanced vapor injection structure according to claim 15, wherein the valve plate is secured in the valve plate groove by a valve plate baffle and a rivet.

17. A compressor, comprising the enhanced vapor injection structure according to any one of claims 1 to 16.
